(19) **Europäisches Patentamt / European Patent Office / Office européen des brevets**

(11) **EP 2 506 639 B1**

(12) **EUROPEAN PATENT SPECIFICATION**

(45) Date of publication and mention of the grant of the patent:
**04.06.2014 Bulletin 2014/23**

(21) Application number: **11360013.4**

(22) Date of filing: **31.03.2011**

(51) Int Cl.:
*H04W 52/32* (2009.01)    *H04W 52/34* (2009.01)
*H04W 52/24* (2009.01)    *H04W 52/40* (2009.01)

(54) **Pilot power control**

Pilotleistungssteuerung

Commande de puissance d'un canal pilote

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.10.2012 Bulletin 2012/40**

(73) Proprietor: **Alcatel Lucent**
**75007 Paris (FR)**

(72) Inventors:
• **Kuzminskiy, Alexandr**
**Wiltshire SN5 5BG (GB)**
• **Lust, Sigmar**
**94120 Fontenay sous Bous (FR)**
• **Le Beyec, Frederic**
**91940 Gomety le Chatel (FR)**
• **D'Agostino, Michele**
**Bristol BS7 0LP (GB)**

(74) Representative: **Sarup, David Alexander**
**Alcatel-Lucent Telecom Ltd**
**Intellectual Property Business Group**
**Christchurch Way**
**Greenwich**
**London SE10 0AG (GB)**

(56) References cited:
**WO-A2-2009/099810      US-A- 5 499 395**

• **ADELANTADO F ET AL: "Dynamic common pilot power management in a real hot spot environment", GLOBAL TELECOMMUNICATIONS CONFERENCE, 2005. GLOBECOM '05. IEEE ST. LOIUS, MO, USA 28 NOV.-2 DEC. 2005, PISCATAWAY, NJ, USA,IEEE, vol. 6, 28 November 2005 (2005-11-28), pages 3529-3533, XP010882739, DOI: 10.1109/GLOCOM.2005.1578429 ISBN: 978-0-7803-9414-8**

## Description

<u>FIELD OF THE INVENTION</u>

The present invention relates to a method of adapting pilot signal transmission power of a plurality of base stations operable to provide coverage in a wireless communications network, a computer program product and network controller.

<u>BACKGROUND</u>

Wireless telecommunications networks are known. In a cellular system radio coverage is provided by regions of geographical area. Those regions are known as cells. A base station is located in each cell to provide the radio coverage. Traditional base stations provide coverage in relatively large geographical areas and the cells are often referred to as macro cells.

Radio coverage optimisation of base stations is an important element in improving the overall performance of each of the base stations within a group and overall network performance. A group of base stations with co-ordinated and optimised coverage may achieve higher end user data rate, improved quality of service and lower overall energy usage than would otherwise be possible. However, achieving optimised coverage requires careful trade-offs to be made in order to accommodate conflicting objectives.

US 5 499 395 describes a cellular mobile communication system including a plurality of base stations. Each base station is connected to a relay station. The base stations support cells. The size of cells supported by a base station may be adapted. The size of cell supported by each base station is controlled by the relay station in dependence upon traffic volume experienced in a cell. The relay station monitors or supervises traffic in the cells under control of base stations. If it determines that traffic volume in a cell exceeds a predetermined threshold value, it acts to "microcellulate" that cell and commands lowering of amplification gain of pilot signal. The relay station sends a control signal to base stations in charge of controlling adjacent cells to the microcellulated cell, instructing an increase in power amplification gain.

Accordingly, it is desired to provide a method which offers possible ways to achieve data traffic overload reduction by means of pilot power control.

<u>SUMMARY</u>

A first aspect provides a method of adapting pilot signal transmission power of a plurality of base stations operable to provide coverage in a wireless communications network, the method comprising the steps of:

> monitoring an indication of data traffic supported by each base station;

assessing for each base station whether the indication of data traffic has passed a first predetermined value;

selecting a set of adjacent base stations for each base station having an indication of data traffic assessed to have passed the first predetermined value; and

instructing an increase to the pilot signal transmission power for those base stations in the selected set of adjacent base stations which are determined to have an indication of data traffic passed a second predetermined value, subject to coverage constraints which operate to ensure said plurality of base stations are operable to provide radio coverage across a predetermined geographic area, said coverage constraints being calculated by:

> determining coverage control points in said predetermined geographical area and obtaining channel gains from a set of said plurality of base stations to each coverage control point.

The first aspect recognises that radio coverage optimisation of base stations is an important element in improving the overall performance of each of the base stations within a group. A group of base stations with co-ordinated and optimised coverage can achieve higher end user data rates and improved quality of service than would otherwise be possible. However, the first aspect also recognises that achieving optimised coverage requires careful trade-offs to be made in order to accommodate conflicting objectives. Furthermore, since the network provider may have little or no control over the exact locations of user equipment in a network and the type of data traffic loads requested from user equipment in a given area, the first aspect recognises that coordinating the radio coverage areas of a plurality of base stations such that data traffic load is spread to achieve efficient overall network operation can become difficult to achieve. The first aspect provides a method which offers a means to achieve data traffic overload reduction by means of pilot power control.

The first aspect recognises that by monitoring an indication of data traffic supported by each of the plurality of base stations, that is to say, by monitoring base station data traffic parameters, it becomes possible to identify when the data traffic supported by a particular base station reaches, nears or exceeds a predetermined high traffic threshold and that by identifying base stations meeting such a criteria, it is likely that an appropriate ameliorative strategy to spread the data traffic load within a network more efficiently becomes possible.

The first aspect recognises that by utilising a centralised computation approach to determine base station configurations for the network, information such as neighbour lists held by a centralised controller can be used to identify likely base station candidates to alleviate data load at an overloaded base station. Using a centralised controller may ensure access to information gathered across a plurality of base stations and can be more accurate and complete than information gathered from user equipment in a network and reported to each base station. Use of a centralised method may allow best optimisation of radio coverage areas across a plurality of base stations forming a wireless communication network

Although this technique has particular utility to macro base stations deployed in wireless networks, it will be appreciated that similar functionality would also be beneficial in other base stations such as small cell networks or network nodes such as, for example, a femto base station controller.

According to the first aspect, base stations adjacent an overloaded base station may be identified and their radio coverage area (also known as a cell), determined by the pilot signal transmission power of each base station can be adjusted to allow those adjacent base stations to lift some of the data traffic load from an overloaded base station. In particular, the first aspect recognises that it can be beneficial to increase the pilot signal transmission power of those adjacent base stations which are determined not to themselves be overloaded, that is to say the second threshold may, in some embodiments, be set to be identical to the first threshold. In some embodiments, the second threshold may be selected such that the coverage area of adjacent base stations which are supporting a low level of data traffic is increased. That is to say, only those adjacent base stations for which an indication of data traffic being supported by that base station is lower, close to, or beneath a predetermined low data traffic threshold may have a coverage area increased to alleviate data traffic load from an overloaded base station.

In this way, it can be seen that a plurality of base stations within a network may be dynamically controlled to adjust their radio coverage areas to cause communications loading within the network to be rebalanced to enable efficient use of resources and optimise the overall performance of each of the base stations within the group. A group of base stations with co-ordinated and optimised coverage can achieve higher end user data rates and improved quality of service than would otherwise be possible.

The step of increasing pilot transmit power for those base stations in the selected set of adjacent base stations comprises increasing said pilot transmit power of base stations in the selected set subject to a coverage constraints which operate to ensure the plurality of base stations are operable to provide coverage across a predetermined geographic area. In one embodiment, the coverage constraints are generated based upon calculated channel gains from said plurality of base stations at each location within said predetermined geographic area.

Those coverage constraints may be precalculated, or "static". Use of coverage constraints at a network controller level, in a centralised manner can help to mitigate the change of implementing a solution or changes to network configurations which result in coverage holes. Coverage holes may not be prevented according to some alternative solutions in which since some areas may contain no users with use equipment having coverage to report a low signal-to-interference ratio.

According to some embodiments, a method is implemented in which coverage constraints are used as follows: coverage control points (bins) in a network area are defined. That network area can be a predetermined geographical area. Channel gains from all (or at least neighboring) base stations (cells) to each bin from initial network planning and measurements can be obtained.

For dynamic coverage control (DCC), the channel gains, downlink total transmit powers of all cells and increased pilot powers are used to find the bins that can be covered by all cells except the overloaded ones. The coverage condition is that pilot-to-interference ratio should be higher than a coverage threshold, e.g. -20dB. Then, associate the rest of coverage points with the corresponding overloaded cells according to the highest channel gains and find the pilot powers for the overloaded cells required to cover all control points in their associated coverage areas. These pilot powers may be used as a lower bound constraint.

For static coverage control (SCC), assume that all cells transmit on the maximum power and find a pCPICH distribution that guarantees absence of the coverage holes. Use this distribution as the lower bound constraint to restrict the decreased pCPICH in the overloaded cells. To be efficient, the static coverage control needs the predefined constraint to be as low as possible. Particularly, it can be found during initial planning by means of minimization of the total pilot power in the network subject to the required coverage constraint. Another option selected for simulations below is to use a gain based pCPICH distribution, which defines the pilot power for each cell to cover the bin with the lowest pilot-to-interference ratio in the coverage area of the bins that have the highest channel gain for the given cell.

Accordingly, it will be appreciated that a SCC situation may be implemented at a network controller by provision of an appropriate look up table including necessary coverage constraint information calculated on commissioning of a wireless communication network. Furthermore, it will be appreciated that a DCC situation may be implemented at a network controller by providing suitable initial information regarding network configuration together with appropriate coverage constraint calculation algorithms and appropriate coverage constraint calculation logic and processing ability.

In one embodiment, the set of adjacent base stations comprises a set of base stations directly neighbouring each base station having an indication of data traffic assessed to have passed the first predetermined value. In one embodiment, the set of adjacent base stations consists of a set of base stations directly neighbouring each base station having an indication of data traffic assessed to have passed the first predetermined value. Accordingly, it can be seen that energy savings may be achieved compared to a solution in which pilot power increases in all underloaded cells, since pilot signal transmission power (pCPICH) increases only in underloaded cells that are neighbouring to the overloaded ones.

In one embodiment, the set of adjacent base stations comprises a set of base stations comprising first degree neighbours to each base station having an indication of data traffic assessed to have passed the first predetermined value. In one embodiment, set of adjacent base stations comprises a set of base stations comprising first and second degree neighbours to each base station having an indication of data traffic assessed to have passed the first predetermined value. In some embodiments, further or multilayer neighbours can be considered. Accordingly it will be appreciated that the degree, or level, of underloaded neighbour cells may be adjusted as a design parameter and that neighbour level interactions offer a method design parameter which can act to control a trade off between overload reduction and energy consumption across a network.

In one embodiment, the step of increasing pilot transmit power for those base stations in the selected set of adjacent base stations comprises increasing the pilot signal transmit power of base stations in the selected set by a predetermined increment. Accordingly, a predetermined increment can implement small changes within a network, thereby ensuring that dramatic changes do not detrimentally effect user experience and service, and allow efficient use of an iterative process whereby a change is made and the results of that change can be monitored and adapted, by either taking further incremental steps or by returning to a previous position if overall network performance is compromised by the implemented changes to a given point.

In one embodiment, the predetermined increment is selected based upon the indication of data traffic supported by each base station. Accordingly it will be appreciated that the predetermined increment may be determined based upon the indication of data traffic supported by each base station in dependence upon, for example, the extent to which an overloaded base station exceeds the first predetermined value. That is to say, the increment may be larger if data traffic significantly exceeds a threshold value, and a smaller predetermined increment may be implemented if data traffic marginally exceeds a threshold value. Similarly, if it determined that adjacent cells are significantly underloaded, a method may be implemented in which those very lightly loaded adjacent cells are subjected to a greater pilot signal transmission power increase increment than those more loaded adjacent base stations. In some embodiments, all adjacent cells meeting the underload criteria may be incremented by the same predetermined increment. Alternatively, each underloaded adjacent base station may be incremented by a different predetermined increment, determined by base station operational parameters such as the indication of data traffic supported by each such base station.

In one embodiment, the method further comprises the step of decreasing pilot signal transmission power of each base station having an indication of data traffic assessed to have passed the first predetermined value. It will be appreciated that all of the base stations meeting that criteria may be instructed to decrease pilot signal transmission power, that at least one may be instructed to decrease pilot signal transmission power, or that a subset of those overloaded base stations may be instructed to decrease pilot signal transmission power. Accordingly, it will be appreciated that it is possible to decrease the coverage area of an overloaded base station in conjunction with increasing the coverage areas of adjacent underloaded base stations in order to rebalance data traffic across a network.

In one embodiment, the step of decreasing pilot transmit power for each base station having an indication of data traffic assessed to have passed the first predetermined value comprises decreasing the pilot signal transmission power subject to coverage constraints which operate to ensure the plurality of base stations are operable to provide coverage across a predetermined geographic area.

In one embodiment, the coverage constraints are generated based upon precalculated channel gains from the plurality of base stations at each location within the predetermined geographic area. In one embodiment, the coverage constraints are generated based upon calculated channel gains from the plurality of base stations at each location within the predetermined geographic area including the increased pilot transmit power for those base stations in the selected set of adjacent base stations.

According to some embodiments, a method is implemented in which coverage constraints are used as follows: coverage control points (bins) in a network area are defined. That network area can be a predetermined geographical area. Channel gains from all (or at least neighboring) base stations (cells) to each bin from initial network planning and measurements can be obtained.

For dynamic coverage control (DCC), the channel gains, downlink total transmit powers of all cells and increased pilot powers are used to find the bins that can be covered by all cells except the overloaded ones. The coverage condition is that pilot-to-interference ratio should be higher than a coverage threshold, e.g. -20dB. Then, associate the rest of coverage points with the corresponding overloaded cells according to the highest channel gains and find the pilot powers for the overloaded cells required to cover all control points in their associated coverage areas. These pilot powers may be used as a lower bound constraint.

For static coverage control (SCC), assume that all cells transmit on the maximum power and find a pCPICH distribution that guarantees absence of the coverage holes. Use this distribution as the lower bound constraint to restrict the decreased pCPICH in the overloaded cells. To be efficient, the static coverage control needs the predefined constraint to be as low as possible. Particularly, it can be found during initial planning by means of minimization of the total pilot power in the network subject to the required coverage constraint. Another option selected for simulations below is to use a gain based pCPICH distribution, which defines the pilot power for each cell to cover the bin with the lowest pilot-to-interference ratio in the coverage area of the bins that have the highest channel gain for the given cell.

Accordingly, it will be appreciated that a SCC situation may be implemented at a network controller by provision of an appropriate look up table including necessary coverage constraint information calculated on commissioning of a wireless communication network. Furthermore, it will be appreciated that a DCC situation may be implemented at a network controller by providing suitable initial information regarding network configuration together with appropriate coverage constraint calculation algorithms and appropriate coverage constraint calculation logic and processing ability.

In one embodiment, the indication of data traffic supported by each base station comprises an indication of downlink load at each base station. It will be appreciated that any appropriate key performance indicator or data traffic parameter may be successfully utilised, as long as that key performance indicator offers a representation indicative of a data traffic level being supported by a given base station. It will be apparent to the man skilled in the art that a number of parameters may be monitored within a network to provide such an indication.

In one embodiment, all steps are periodically repeated. Accordingly, an iterative process results which may allow for self-optimisation across a network. Embodiments provide a method which may address the issues described above by automatically adapting a UTRAN network design configuration as a consequence of real time field observations of Key Performance Indicators which have modified the initial UTRAN planning assumptions. In particular, a network controller, for example an RNC, can automatically spread data traffic by means of pCPICH power re-distribution, when traffic overload situations are detected in one or multiple sites. Overloaded cells can be shrunk via pCPICH Power reduction whilst coverage of neighbouring cells can be expanded by increasing their CPICH Power.

A second aspect provides a computer program product operable, when executed on a computer, to perform the method of the first aspect.

A third aspect provides a network controller operable to adapt pilot signal transmission powers of a plurality of base stations which provide radio coverage in a wireless communications network, the network controller comprising:

monitoring logic operable to monitor an indication of data traffic supported by each base station;

assessment logic operable to assess whether the indication of data traffic has passed a first predetermined value;

selection logic operable to select a set of adjacent base stations for each base station having an indication of data traffic assessed to have passed the first predetermined value; and

instruction logic operable to instruct an increase to the pilot signal transmission power for those base stations in the selected set of adjacent base stations which are determined to have an indication of data traffic passed a second predetermined value, subject to coverage constraints which operate to ensure said plurality of base stations are operable to provide radio coverage across a predetermined geographic area, said coverage constraints being calculated by determining coverage control points in said predetermined geographical area and obtaining channel gains from a set of said plurality of base stations; to each coverage control point.

In one embodiment, the selection logic is operable to select a set of adjacent base stations comprising a set of base stations directly neighbouring each base station having an indication of data traffic assessed to have passed the first predetermined value.

In one embodiment, the selection logic is operable to select a set of adjacent base stations comprising first degree neighbours to each base station having an indication of data traffic assessed to have passed the first predetermined value.

In one embodiment, the selection logic is operable to select a set of adjacent base stations comprising first and second degree neighbours to each base station having an indication of data traffic assessed to have passed the first predetermined value.

In one embodiment, the instruction logic is operable to instruct an increase pilot transmit power for those base stations in the selected set of adjacent base stations, that instruction comprising increasing the pilot transmit power of base stations in the selected set by a predetermined increment.

In one embodiment, the predetermined increment is selected based upon the indication of data traffic supported by each base station.

In one embodiment, the coverage constraints are generated based upon calculated channel gains from the plurality of base stations at each location within the predetermined geographic area.

In one embodiment, the instruction logic is further operable to instruct a decrease to pilot signal transmission power of each base station having an indication of data traffic assessed to have passed the first predetermined value.

In one embodiment, the step of decreasing pilot transmit power for each base station having an indication of data traffic assessed to have passed the first predetermined value comprises decreasing the pilot signal transmit power subject to coverage constraints which operate to ensure said plurality of base stations are operable to provide coverage across a predetermined geographic area.

In one embodiment, the coverage constraints are generated based upon calculated channel gains from the plurality of base stations at each location within the predetermined geographic area.

In one embodiment, the coverage constraints are generated based upon calculated channel gains from the plurality of base stations at each location within the predetermined geographic area including the increased pilot transmit power for those base stations in the selected set of adjacent base stations.

In one embodiment, the indication of data traffic supported by each base station comprises an indication of downlink load at each base station.

In one embodiment, the network controller further comprises repetition logic operable to repeat steps performed across the monitoring, assessment, selection and instruction logic.

Further particular and preferred aspects are set out in the accompanying independent and dependent claims. Features of the dependent claims may be combined with features of the independent claims as appropriate, and in combinations other than those explicitly set out in the claims.

## BRIEF DESCRIPTION OF THE DRAWINGS

Embodiments of the present invention will now be described further, with reference to the accompanying drawings, in which:

> Figure 1 illustrates the main components of a telecommunications network according to one embodiment;
> Figure 2 illustrates schematically an implementation according to one embodiment;
> Figure 3 illustrates schematically method steps implemented at an RNC according to some embodiments;
> Figures 4 and 5 illustrate the results of simulation according to one embodiment; and
> Figures 6 and 7 illustrate graphically statistical simulation results according to one embodiment.

## DESCRIPTION OF THE EMBODIMENTS

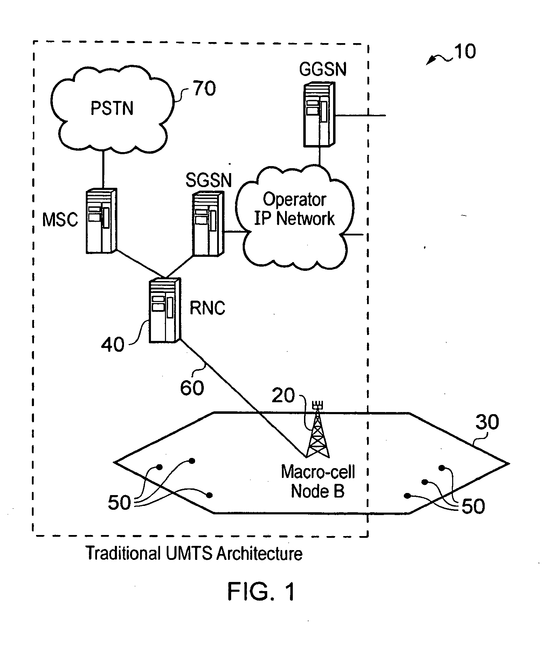

Figure 1 illustrates a wireless telecommunications system 10 according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically a different antenna within a base station supports each associated sector. Accordingly, each base station 20 has multiple antennas and signals sent through the different antennas are electronically weighted to provide a sectorised approach. Of course, it will be appreciated that Figure 1 illustrates a small subset of the total number of user equipment and base stations that may be present in a typical communications system.

The wireless communications system is managed by a radio network controller (RNC) 40. The radio network controller 40 controls operation of the wireless communications system by communicating with a plurality of base stations over a backhoul communications link 60. The network controller also communicates with user equipment 50 via each base station and thus effectively manages the entire wireless communications system.

A radio network controller 60 maintains a neighbour list which includes information about geographical relationships between sectors supported by base stations 20. In addition, the radio network controller 60 maintains location information which provides information on the location of user equipment 50 within the wireless communication system 10. The radio network controller is operable to route traffic via circuit switched and packet switched networks. Hence, a mobile switching centre is provided with which the radio network controller may communicate. The mobile switching centre can communicate with a circuit switched network such as a public switched telephone network (PSTN) 70. Similarly, a network controller can communicate with service general package radio service support nodes (SGSNs) and a gateway general packet support node (GGSN). The GGSN can communicate with a packet switched core such as for example, the Internet.

User equipment 50 typically transmits information and data to a base station 20 so that it can be rerouted within a wireless telecommunications network. User equipment may, for example, need to transmit data to the base station in order to relay text messages, voice information when a user is using the equipment to make a telephone coll, or other data. The base station 20, in combination with parameters set by the radio network controller 40, allocates resource to user equipment in a manner that aims to optimise operation of the wireless telecommunications network 10.

The scale and complexity of wireless networks has created a need to consider self-organization and self-optimization as ways to manage and monitor such highly complex systems without a need to resort to the intervention of human operators.

Furthermore, the need to consider such solutions is justified by operational expenses associated with configuration, operation and optimisation of wireless networks, which, unlike declining hardware costs, are rising considerably.

One possible scenario in which self-optimisation and self-organisation may be implemented is in a method and system operable to automate optimisation of common pilot power control of a base station in a wireless communication network. Such a system may operate to implement data load balancing whilst, in some embodiments also taking account of coverage control, thereby reducing operation expenditure related to ongoing optimisation and re-planning of a network, for example, a WCDMA network.

Possible solutions define rules for an online iterative pilot power increase across all underloaded cells and an online iterative pilot power decrease in all highly loaded cells to maintain downlink data traffic load balancing. In such possible solutions, coverage control is implemented by monitoring reports from user equipment of a received pilot-to-interference ratio. An additional increase of the power of Common Pilot Channel (pCPICH) can be implemented if some user equipment in a coverage area of a base station report pilot-to-interference ratio below some threshold.

Such possible solutions are not without issues: online coverage control based on reports from the existing users cannot prevent appearance of the coverage holes for online pCPICH redistribution since some areas may contain no users to report a low signal-to-interference ratio. Furthermore, pilot power increase in all underloaded cells may not be an energy efficient solution because may lead to excessive power consumption and pilot power pollution.

In one embodiment, an algorithm is provided which addresses the issues described above by automatically adapting a UTRAN network design configuration as a consequence of real time field observations of Key Performance Indicators which have modified the initial UTRAN planning assumptions. In particular, a RNC can automatically spread data traffic by means of pCPICH power re-distribution, when traffic overload situations are detected in one or multiple sites. Overloaded cells can be shrunk via pCPICH Power reduction whilst coverage of neighbouring cells can be expanded by increasing their CPICH Power.

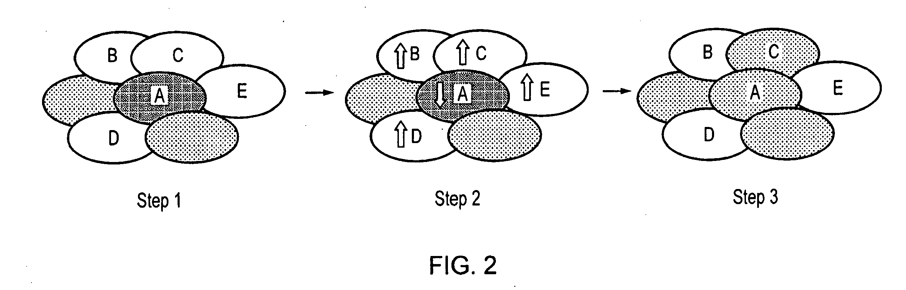

Figure 2 illustrates schematically an implementation according to one embodiment. Step 1 illustrates a scenario in which an overload cell (A) is detected. cPICH change proposals are computed in step 2 to balance traffic load over a set of adjacent cells, in the illustrated example, the change proposals comprise increasing pilot power in cells labelled B, C, D and E and decreasing pilot power in cell A. In the simple case illustrated in Figure 2, those change proposals assume that global load within the set of cells does not exceed a given traffic threshold.

According to some embodiments, coverage control is performed by means of introduction of precalculated or online adjusted pCPICH lower bounds based on the channel gains obtained from initial network planning.

Energy savings may be achieved compared to a solution in which pilot power increases in all underloaded cells, since pCPICH increases only in underloaded cells that are neighbouring to the overloaded ones.

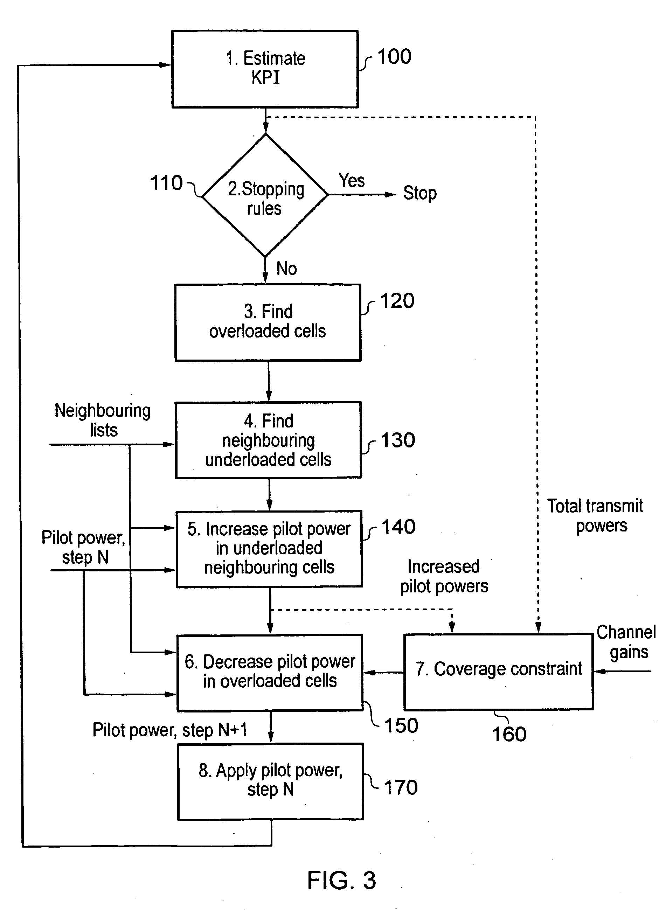

Figure 3 illustrates schematically method steps implemented at an RNC according to some embodiments. According to the illustrated method, a first step 100 comprises estimation of Key Performance Indicators (KPI). Those estimations may be used at step 110 to determine whether stopping rules are satisfied. If stopping rules are not satisfied, then overloaded cells are identified (step 120) and corresponding neighbouring underloaded cells are defined (step 130) using the known lists of the neighbouring cells for the whole network and the KPI estimation. An increase to pilot power in the corresponding underloaded cells is calculated (step 140) subject to a maximum pCPICH difference between neighbouring cells constraint, thereby avoiding performance degradation on uplink channels. Then, according to some embodiments, a new pilot power of the overloaded cells can be found (step 150) subject to the same maximum difference constraint in conjunction with a coverage constraint (step 160).

Possible coverage constraints can be defined as follows:

    1. A dynamic coverage constraint (illustrated by dashed lines in Figure 3). According to such a constraint, known channel gains from all cells to all coverage control points, downlink total transmit powers of all cells and increased pilot powers in the underloaded cells neighbouring to the overloaded ones, are used to find the coverage points that can be covered by all cells except of the overloaded ones. Then, the rest of coverage points in the coverage area of the overloaded cells before pCPICH decreasing are associated with the corresponding overloaded cells according to the highest channel gains and the pilot powers for the overloaded cells required to cover all control points in their associated coverage areas are found. Those pilot powers are used as the lower bound constraint additionally to the maximum difference constraint.

    2. Static coverage constraint. Such a coverage constraint assumes that all cells transmit on the maximum power and finds a pCPICH distribution that aims to guarantees an absence of coverage holes. That distribution is used as a lower bound constraint in addition to a maximum difference constraint for finding a decreased pCPICH in the overloaded cells. To be efficient, static coverage control requires that the predefined constraint is as low as possible. Particularly, it can be found during initial planning by means of minimization of the total pilot power in the network subject to the required coverage constraint.

Once revised pilot powers are calculated an updated pCPICH distribution can be instructed (step 170) and applied.

Example features of each step relating to implementations of possible proposed solutions, as illustrated generally in Figure 3, are outlined below.

1. Downlink load may be used as KPI:

$$L_i = P_i^{tot} / P_i^{\max},$$

where $L_i$ is the load, $P_i^{tot}$ is the total transmit power, and $P_i^{\max}$ is the maximum transmit power in the i th cell.

2. Stopping rules: $L_i$ may, for example, meet one or more of the following criteria:

No overloaded cells are found, i.e., $L_i < L_0$ for all cells, where $L_0$ is the overload threshold

Repetition of the pCPICH distribution.

Maximum number of iterations of the loop shown schematically in Figure 3.

3. Finding overloaded cells: find cells $i_h$, $h = 1,..., H$

such that $L_{i_h} \geq L_0$, where $H$ is the number of overloaded cells.

4. Finding multi-layer neighboring underloaded cells:

A Voronoi algorithm may be used to obtain lists of neighboring cells for all cells in a network. Two cells may be considered neighboring ones if they have a joint border.

- Layer 1 (first degree neighbour cells): Find lists of neighboring cells $i_{jh}$, $j = 1,...,J_h$, $h = 1,...,H$, where $J_h$ is the number of cells that have a joint border with the $i_h$ cell.
- Layer 2 (second degree neighbour cells) : Find lists of neighboring cells $i_{lh}$, $l = 1,...,J_{jh}$, $j = 1,...,J_h$, $h = 1,...,H$, where $J_{lh}$ is the number of cells that have a joint border with the $i_{jh}$ cell defined at Layer 1, and so on.

Form lists of all cells $i_{qh}$, $q = 1,...,J_{Qh}$, $h = 1,...,H$ neighboring to the $i_h$ th one for the given number of layers $Q$ by means of combining the neighboring cells found at layers $1,...,Q$, where $J_{Qh}$ is the number of neighboring cells for the $i_h$ th cell for a given $Q$.

Find underloaded neighboring cells $i_{qh}$, $q = 1,...,J'_{Qh}$, $h = 1,...,H$ such that $L_{i_{jh}} < L_1$, where $L_1$ is the underload threshold and $J'_{Qh} \leq J_{Qh}$ is the number of underloaded neighbors of the overloaded $i_h$ th cell for a given $Q$.

Where $Q$ is a design parameter to control a trade off between overload reduction and energy consumption (see the simulation results below).

5. Increase pilot power in underloaded neighboring cells:

- Define the step up depending on the cell load, e.g., $S_{up}^1 < S_{up}^2 < S_{up}^3$ such that $S_{up}^1$ for $L_2 \leq L_{i_{jh}} < L_1$, $S_{up}^2$ for $L_3 \leq L_{i_{jh}} < L_2$, and $S_{up}^3$ for $L_{i_{jh}} < L_3$, where $L_3 < L_2 < L_1$ are some thresholds.
- Increase the pilot power in the cells $i_{jh}$, $j = 1,...,J'_h$, $h = 1,...,H$ by the steps defined above.
- Use the neighboring lists for the cells $i_{jh}$, $j = 1,...,J'_h$, $h = 1,...,H$ and restrict the pilot power increase according to the maximum pilot power difference constraint as well as to the maximum pilot power constraint.

6. Decrease pilot power in the overloaded cells:

- Decrease the pilot power in cells $i_h$, $h = 1,...,H$ by the step down $S_{down}$.

- Use the neighboring lists for the cells $i_h$, $h = 1,...,H$ and restrict the pilot power decrease according to the maximum pilot power difference constraint as well as to the minimum pilot power and coverage constraints.

7. Coverage constraint:

- Define coverage control points (bins) in the network area.
- Obtain the channel gains from all (or at least neighboring) base stations (cells) to each bin from initial network planning and measurements.
- For dynamic coverage control (DCC), the channel gains, downlink total transmit powers of all cells and increased pilot powers after step 5, are used to find the bins that can be covered by all cells except the overloaded ones. The coverage condition is that pilot-to-interference ratio should be higher than the coverage threshold, e.g. -20dB. Then, associate the rest of coverage points in the coverage area of the overloaded cells before pCPICH decreasing with the corresponding overloaded cells according to the highest channel gains and find the pilot powers for the overloaded cells required to cover all control points in their associated coverage areas. Use these pilot powers as the lower bound constraint in step 6.

- For static coverage control (SCC), assume that all cells transmit on the maximum power and find a pCPICH distribution that guarantees absence of the coverage holes. Use this distribution as the lower bound constraint to restrict the decreased pCPICH in the overloaded cells. To be efficient, the static coverage control needs the predefined constraint to be as low as possible. Particularly, it can be found during initial planning by means of minimization of the total pilot power in the network subject to the required coverage constraint. Another option selected for simulations below is to use a gain based pCPICH distribution, which defines the pilot power for each cell to cover the bin with the lowest pilot-to-interference ratio in the coverage area of the bins that have the highest channel gain for the given cell.

8. Eventually, the new pilot power distribution is applied for the next iteration.

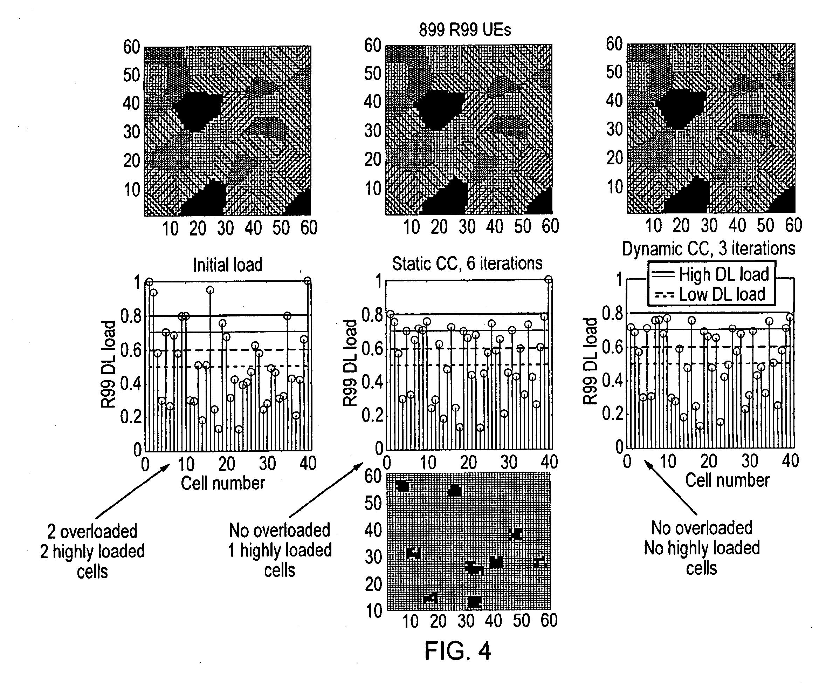

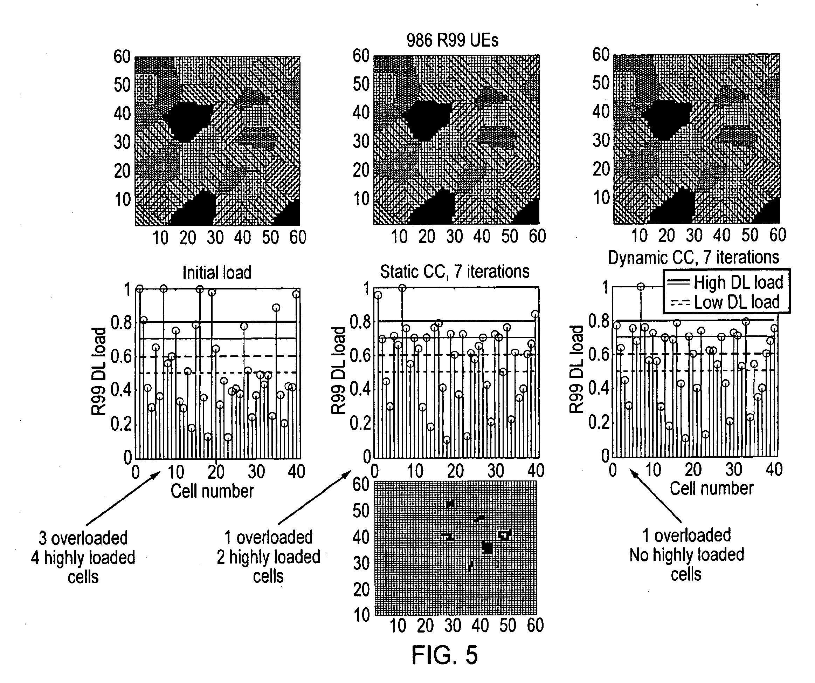

Figures 4 and 5 illustrate the results of simulation according to one embodiment.

In the illustrated simulation, the following coverage model was used:

- 12x12 km network area;
- 3600 uniformly distributed bins;
- 40 cells;
- COST 231 propagation model;
- 100 dBm noise power;
- 20 W maximum downlink power.

The following traffic models were used respectively in the simulations of Figures 4 and 5 respectively:

- 899 and 986 voice users (-20 dB signal-to-interference ratio target) are randomly distributed in the coverage area with 10 randomly located hotspots of 5x5 bins.
- In all cells, the downlink power not allocated to voice users goes to HSDPA users, i.e., all cells transmit on the maximum power (R99+HSDPA Option 2).

Algorithm parameters:

- $L_0 = 0.8$, $L_1 = 0.7$, $L_2 = 0.6$, $L_3 = 0.5$;
- $S_{up}^1 = 0.25\,\text{dB}$, $S_{up}^2 = 0.5\,\text{dB}$, $S_{up}^3 = 0.75\,\text{dB}$;
- $S_{down} = 0.5$ dB;
- [0.6,1.5] W pilot power range;
- 3 dB maximum difference constraint;

- number of layers $Q$=1 and 2 ;
- maximum number of iterations is 10;
- a gain-based pCPICH distribution is used for initialization and static coverage control.

The simulation results for 2 different hotspot locations and $Q$=1 are given in Figures 4 and 5. Each of those Figures also includes an illustration showing distribution of the data traffic demand in the network, cell configurations, and downlink loads for the initial pilot distribution as well as for the redistribution outcome with the static and dynamic coverage control.

In both scenarios, the proposed algorithms allow decreasing load at least in some of the initially overloaded cells. Furthermore, a method including dynamic coverage control demonstrates better results compared to a method including static coverage control.

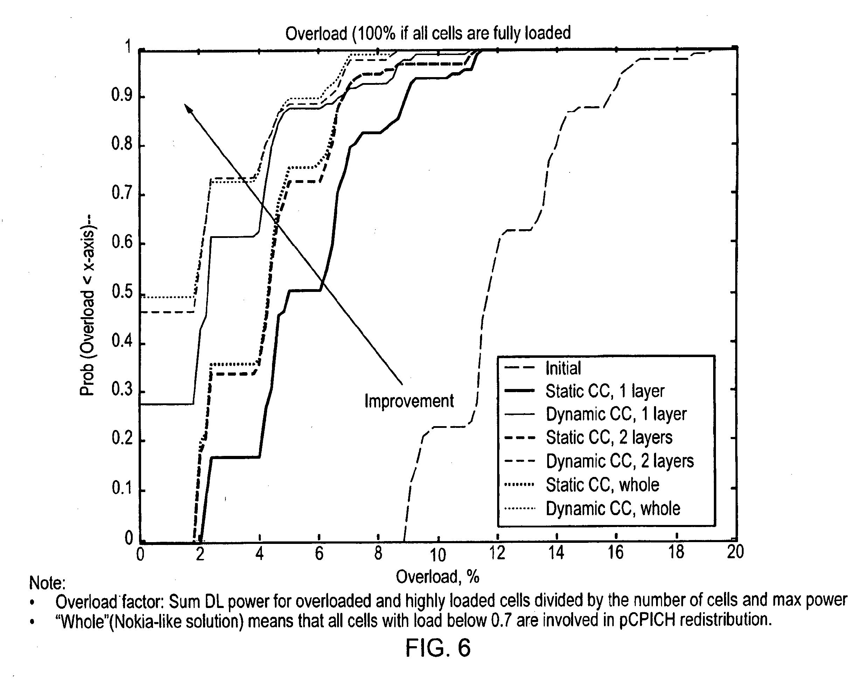

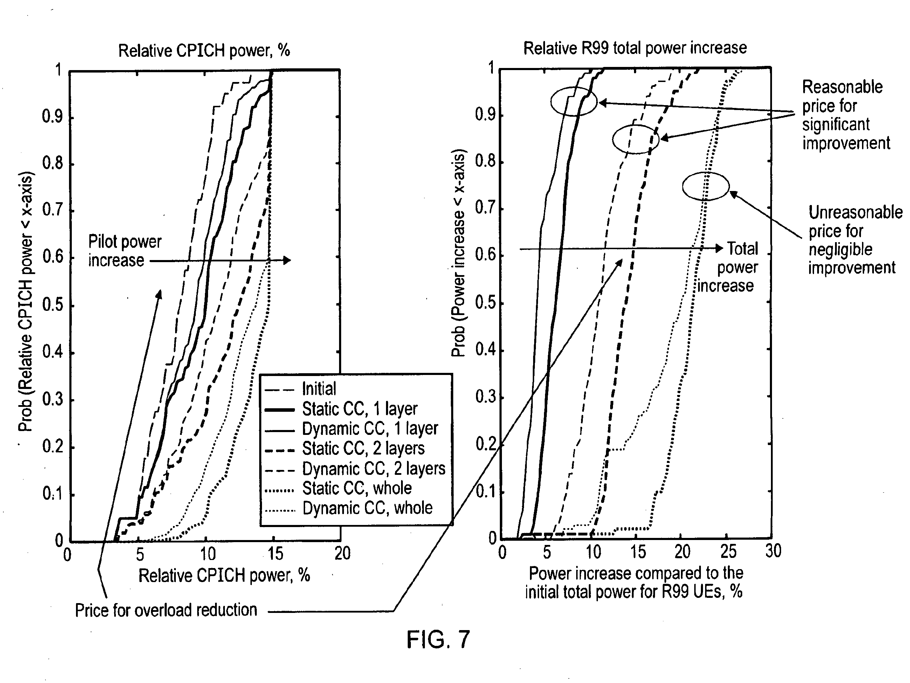

Figures 6 and 7 illustrate graphically statistical simulation results according to one embodiment. In the simulation upon which Figures 6 and 7 are based, 100 random hotspot locations similar to the ones in Figures 4 and 5 are shown for static and dynamic coverage control and $Q$ = 1 and 2. Figures 6 and 7 also include results for a pilot power redistribution for all underloaded cells in a whole network, without taking into account the neighboring relations between cells, as in, for example, steps 130 to 150 of the example method illustrated schematically in Figure 3.

Figures 6 and 7 show that the two-layer ($Q$=2) solution gives the best trade off between overload reduction and energy consumption in the considered scenario.

Embodiments may provide huge benefits to service providers by reducing operational expenses incurred with optimisation activities and by increasing the Quality of Service and Quality of Experience provided to end users.

Advantages of embodiments include better coverage control and better energy efficiency as specified below:

Allowance for two coverage control options (dynamic and static) which do not rely on reports from existing users allowing the identification of coverage holes. Coverage holes may not be prevented according to some solutions since some areas may contain no users to report a low signal-to-interference ratio.

Embodiments can be energy efficient since pCPICH may be increased only in the underloaded cells that are neighbouring to the overloaded ones instead of a pilot power increase across all underloaded cells in accordance with some solutions. Increasing pilot power across all underloaded cells can lead to excessive power consumption and pilot power pollution.

More specifically, multi-layer pCPICH redistribution (that is to say, choosing layer 1 neighbours, layer 2 neighbours, or even further layer neighbours) allows some trade off between overload reduction and energy consumption.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method of adapting pilot signal transmission power of a plurality of base stations (20) operable to provide coverage in a wireless communications network (10), said method comprising the steps of:

   monitoring an indication of data traffic supported by each base station;
   assessing (120) for each base station whether said indication of data traffic has passed a first predetermined value;
   selecting (130) a set of adjacent base stations for each base station having an indication of data traffic assessed to have passed said first predetermined value; and
   instructing (140) an increase to the pilot signal transmission power for those base stations in said selected set of adjacent base stations which are determined to have an indication of data traffic passed a second predetermined value, subject to coverage constraints which operate to ensure said plurality of base stations are operable to provide radio coverage across a predetermined geographic area, said coverage constraints being calculated (160) by:

      determining coverage control points in said predetermined geographical area and obtaining channel gains from a set of said plurality of base stations to each coverage control point.

2. A method of adapting pilot signal transmission power according to claim 1, wherein said set of adjacent base stations (20) comprises a set of base stations directly neighbouring each said base station having an indication of data traffic assessed to have passed said first predetermined value.

3. A method of adapting pilot signal transmission power according to claim 2, wherein said set of adjacent base stations further comprises a set of base stations being second degree neighbours to each said base station having an indication of data traffic assessed to have passed said first predetermined value.

4. A method of adapting pilot signal transmission power according to any preceding claim, wherein said step of instructing an increase to pilot signal transmission power for those base stations in said selected set of adjacent base stations comprises an instruction to increase said pilot signal transmission power of base stations in said selected set by a predetermined increment.

5. A method of adapting pilot signal transmission power according to claim 4, wherein said predetermined increment is selected based upon said indication of data traffic supported by each base station.

6. A method of adapting pilot signal transmission power according to any preceding claim, wherein said coverage constraints are generated (160) based upon precalculated channel gains from said plurality of base stations at each location within said predetermined geographic area.

7. A method of adapting pilot signal transmission power according to any preceding claim, further comprising instructing (150) a decrease in pilot signal transmission power of at least one said base station having an indication of data traffic assessed to have passed said first predetermined value.

8. A method of adapting pilot signal transmission power according to claim 7, wherein said step of decreasing pilot transmit power for said base station having an indication of data traffic assessed to have passed said first predetermined value comprises decreasing said pilot transmit power subject to coverage constraints which operate to ensure said plurality of base stations are operable to provide coverage across a predetermined geographic area.

9. A method of adapting pilot signal transmission power according to claim 8, wherein said coverage constraints are generated based upon precalculated channel gains from said plurality of base stations at each location within said predetermined geographic area.

10. A method of adapting pilot signal transmission power according to claim 8, further comprising a step of generating said coverage constraints based upon calculated channel gains from said plurality of base stations at each location within said predetermined geographic area including said increased pilot signal transmission power for those base stations in said selected set of adjacent base stations.

11. A method of adapting pilot signal transmission power according to any preceding claim, wherein said indication of data traffic supported by each base station comprises an indication of downlink load supported by each base station.

12. A method of adapting pilot signal transmission power according to any preceding claim, further comprising a periodic repetition of all steps.

13. A computer program product operable, when executed on a computer, to perform the method of any one of claims 1 to 12.

14. A network controller operable to adapt pilot signal transmission powers of a plurality of base stations which provide radio coverage in a wireless communications network, said network controller comprising:

monitoring logic operable to monitor an indication of data traffic supported by each base station;

assessment logic operable to assess whether said indication of data traffic has passed a first predetermined value;

selection logic operable to select a set of adjacent base stations for each base station having an indication of data traffic assessed to have passed said first predetermined value; and

instruction logic operable to instruct an increase to the pilot signal transmission power for those base stations in said selected set of adjacent base stations which are determined to have an indication of data traffic passed a second predetermined value, subject to coverage constraints which operate to ensure said plurality of base stations are operable to provide radio coverage across a predetermined geographic area, said coverage constraints being calculated by determining coverage control points in said predetermined geographical area and obtaining channel gains from a set of said plurality of base stations to each coverage control point.

## Patentansprüche

1. Verfahren zur Anpassung der Pilotsignalübertragungsleistung einer Vielzahl von Basisstationen (20), welche für die Bereitstellung der Abdeckung in einem drahtlosen Kommunikationsnetzwerk (10) betriebsfähig sind, wobei das besagte Verfahren die folgenden Schritte umfasst:

Überwachen einer Anzeige von durch jede Basisstation unterstütztem Datenverkehr;
Beurteilen (120) für jede Basisstation, ob die besagte Anzeige des Datenverkehrs einen ersten vorgegebenen Wert überschritten hat;
Auswählen (130) eines Satzes von angrenzenden Basisstationen für jede Basisstation, für welche angezeigt wird, dass der Datenverkehr als den besagten ersten vorgegebenen Wert überschreitend beurteilt wurde; und
Anweisen (140) einer Erhöhung der Pilotsignalübertragungsleistung für diejenigen Basisstationen in dem besagten ausgewählten Satz von angrenzenden Basisstationen,
für welche die Anzeige ermittelt wurde, dass der Datenverkehr einen zweiten vorgegebenen Wert überschritten hat, welche Einschränkungen unterworfen ist, die geeignet sind, um zu gewährleisten, dass die besagte Vielzahl von Basisstationen betriebsfähig sind, um eine Funkabdeckung über einen vorgegebenen geografischen Bereich hinweg bereitzustellen, wobei die besagten Abdeckungseinschränkungen durch Ermitteln von Abdeckungskontrollpunkten in dem besagten vorgegebenen geografischen Bereich, und Erhalten von Kanalverstärkungen von einem Satz der besagten Vielzahl von Basisstation an jedem Abdeckungskontrollpunkt berechnet (160) werden.

2. Verfahren zur Anpassung der Pilotsignalübertragungsleistung nach Anspruch 1, wobei der besagte Satz von angrenzenden Basisstationen (20) einen Satz von direkt benachbarten Basisstationen umfasst, wobei eine jede der besagten Basisstationen eine Anzeige aufweist, welche die Beurteilung angibt, dass der Datenverkehr den besagten ersten vorgegebenen Wert überschritten hat.

3. Verfahren zur Anpassung der Pilotsignalübertragungsleistung nach Anspruch 2, wobei der besagte Satz von angrenzenden Basisstationen weiterhin einen Satz von Basisstationen, welche Nachbarn zweiten Grades einer der besagten Basisstationen mit der Anzeige, welche die Beurteilung angibt, dass der Datenverkehr den besagten ersten vorgegebenen Wert überschritten hat, sind, umfasst.

4. Verfahren zur Anpassung der Pilotsignalübertragungsleistung nach einem beliebigen der vorstehenden Ansprüche, wobei der besagte Schritt des Anweisens einer Erhöhung der Pilotsignalübertragungsleistung für diejenigen Basisstationen in dem besagten ausgewählten Satz von angrenzenden Basisstationen eine Anweisung zur Erhöhung der besagten Pilotsignalübertragungsleistung der Basisstationen in dem besagten ausgewählten Satz um ein vorgegebenes Inkrement umfasst.

5. Verfahren zur Anpassung der Pilotsignalübertragungsleistung nach Anspruch 4, wobei das besagte vorgegebene Inkrement auf der Basis der besagten Anzeige des durch jede Basisstation unterstützten Datenverkehrs ausgewählt wird.

6. Verfahren zur Anpassung der Pilotsignalübertragungsleistung nach einem beliebigen der vorstehenden Ansprüche, wobei die besagten Abdeckungseinschränkungen (160) auf der Basis von vorberechneten Kanalverstärkungen von der besagten Vielzahl von Basisstationen an jedem Aufenthaltsort innerhalb des besagten geografischen Bereichs erzeugt werden.

7. Verfahren zur Anpassung der Pilotsignalübertragungsleistung nach einem beliebigen der vorstehenden Ansprüche, weiterhin umfassend das Anweisen einer Verringerung (150) der Pilotsignalübertragungsleistung mindestens einer der besagten Basisstationen mit einer Anzeige, die die Beurteilung angibt, dass der Datenverkehr den besagten ersten vorgegebenen Wert überschritten hat, umfasst.

8. Verfahren zur Anpassung der Pilotsignalübertragungsleistung nach Anspruch 7, wobei der besagte Schritt des Verringerns der Pilotübertragungsleistung für die besagte Basisstation mit einer Anzeige, die die Beurteilung angibt, dass der Datenverkehr den besagten ersten vorgegebenen Wert überschritten hat, das Verringern der besagten Pilotübertragungsleistung, welche Einschränkungen unterworfen ist, die geeignet sind, um zu gewährleisten, dass die besagte Vielzahl von Basisstationen betriebsfähig sind, um eine Abdeckung über einen vorgegebenen geografischen Bereich hinweg bereitzustellen. Umfasst.

9. Verfahren zur Anpassung der Pilotsignalübertragungsleistung nach Anspruch 8, wobei die besagten Abdeckungseinschränkungen auf der Basis von vorberechneten Kanalverstärkungen von der besagten Vielzahl von Basisstation an jedem Aufenthaltsort innerhalb des besagten vorgegebenen geografischen Bereichs erzeugt werden.

10. Verfahren zur Anpassung der Pilotsignalübertragungsleistung nach Anspruch 8, weiterhin umfassend einen Schritt des Erzeugens der besagten Abdeckungseinschränkungen auf der Basis der berechneten Kanalverstärkungen von der besagten Vielzahl von Basisstationen an jedem Aufenthaltsort innerhalb des besagten vorgegebenen geografischen Bereichs einschließlich der besagten erhöhten Pilotsignalübertragungsleistung für diejenigen Basisstationen in dem besagten ausgewählten Satz von angrenzenden Basisstationen.

11. Verfahren zur Anpassung der Pilotsignalübertragungsleistung nach einem beliebigen der vorstehenden Ansprüche, wobei die besagte durch Anzeige des durch jede Basisstation unterstützten Datenverkehrs eine Anzeige der durch jede Basisstation unterstützen Downlink-Last umfasst.

12. Verfahren zur Anpassung der Pilotsignalübertragungsleistung nach einem beliebigen der vorstehenden Ansprüche, weiterhin umfassend eine periodische Wiederholung aller Schritte.

13. Computerprogramm-Produkt, welches betriebsfähig ist, um bei dessen Ausführung auf einem Computer das Verfahren gemäß einem beliebigen der Ansprüche 1 bis 12 durchzuführen.

14. Netzwerk-Controller, betriebsfähig, um Pilotsignalübertragungsleistungen einer Vielzahl von Basisstationen, welche eine Funkabdeckung in einem drahtlosen Netzwerk bereitstellen, anzupassen, wobei der besagte Netzwerk-Controller umfasst:

Überwachungslogik, betriebsfähig, um eine Anzeige des durch jede Basisstation unterstützen Datenverkehrs zu überwachen;

Beurteilungslogik, betriebsfähig, um zu beurteilen, ob die besagte Anzeige von Datenverkehr einen ersten vorgegebenen Wert überschritten hat;

Auswahllogik, betreibbar, um einen Satz von angrenzenden Basisstationen für jede Basisstation, für welche die Beurteilung angezeigt wird, dass der Datenverkehr den besagten ersten vorgegebenen Wert überschritten hat, auszuwählen; und

Anweisungslogik, betreibbar, um eine Erhöhung der Pilotsignalübertragungsleistung für diejenigen Basisstationen in dem ausgewählten Satz von angrenzenden Basisstationen anzuweisen, für welche die Anzeige ermittelt wurde, dass der Datenverkehr einen zweiten vorgegebenen Wert überschritten hat, anzuweisen, welche Abdeckungseinschränkungen welche Einschränkungen unterworfen ist, die geeignet sind, um zu gewährleisten, dass die besagte Vielzahl von Basisstationen betriebsfähig sind, um eine Funkabdeckung über einen vorgegebenen geografischen Bereich hinweg bereitzustellen, wobei die besagten Abdeckungseinschränkungen durch Ermitteln von Abdeckungskontrollpunkten in dem besagten vorgegebenen geografischen Bereich und Erhalten von Kanalverstärkungen von einem Satz der besagten Vielzahl von Basisstation an jedem Abdeckungskontrollpunkt berechnet werden.

**Revendications**

1. Procédé d'adaptation de puissance d'émission du signal pilote d'une pluralité de stations de base (20) permettant d'offrir une couverture dans un réseau de communication sans fil (10), ledit procédé comprenant les étapes suivantes :

surveiller une indication du trafic de données pris en charge par chaque station de base ; évaluer (120) pour chaque station de base si ladite indication de trafic de données a dépassé une première valeur prédéterminée ;
sélectionner (130) un ensemble de stations de base adjacentes pour chaque station de base ayant une indication de trafic de données évaluée comme ayant dépassé ladite première valeur prédéterminée ; et
donner une instruction (140) d'augmentation de la puissance d'émission du signal pilote pour les stations de base dans ledit ensemble sélectionné de stations de base adjacentes qui sont déterminées comme ayant une indication de trafic de données au-delà d'une deuxième valeur prédéterminée, soumise à des contraintes de couverture qui permettent de garantir que ladite pluralité de stations base peut offrir une couverture radio sur une zone géographique prédéterminée, lesdites contraintes de couverture étant calculées (160) comme suit :

déterminer des points de contrôle de couverture dans ladite zone géographique prédéterminée et obtenir des gains de canal à partir d'un ensemble de ladite pluralité de stations de base pour chaque point de contrôle de couverture.

2. Procédé d'adaptation de puissance d'émission du signal pilote selon la revendication 1, dans lequel ledit ensemble de stations de base adjacentes (20) comprend un ensemble de stations de base directement voisines de chacune desdites stations de base ayant une indication de trafic de données évaluée comme ayant dépassé ladite première valeur prédéterminée.

3. Procédé d'adaptation de puissance d'émission du signal pilote selon la revendication 2, dans lequel ledit ensemble de stations de base adjacentes comprend en outre un ensemble de stations de base qui sont des voisins de deuxième ordre de chacune desdites stations de base ayant une indication de trafic de données évaluée comme ayant dépassé ladite première valeur prédéterminée.

4. Procédé d'adaptation de puissance d'émission du signal pilote selon l'une quelconque des revendications précédentes, dans lequel ladite étape d'instruction d'augmentation de la puissance d'émission du signal pilote pour ces stations de base dans ledit ensemble sélectionné de stations de base adjacentes comprend une instruction d'augmentation de ladite puissance d'émission du signal pilote de stations de base dans ledit ensemble sélectionné selon un incrément prédéterminé.

5. Procédé d'adaptation de puissance d'émission du signal pilote selon la revendication 4, dans lequel ledit incrément prédéterminé est sélectionné en fonction de ladite indication du trafic de données pris en charge par chaque station de base.

6. Procédé d'adaptation de puissance d'émission du signal pilote selon l'une quelconque des revendications précédentes, dans lequel lesdites contraintes de couverture sont générées (160) en fonction de gains de canal pré-calculés à partir de ladite pluralité de stations de base à chaque emplacement dans ladite zone géographique prédéterminée.

**7.** Procédé d'adaptation de puissance d'émission du signal pilote selon l'une quelconque des revendications précédentes, comprenant en outre l'instruction (150) d'une diminution de la puissance d'émission du signal pilote d'au moins une desdites stations de base ayant une indication de trafic de données évaluée comme ayant dépassé ladite première valeur prédéterminée.

**8.** Procédé d'adaptation de puissance d'émission du signal pilote selon la revendication 7, dans lequel ladite étape de diminution de la puissance d'émission pilote pour ladite station de base ayant une indication de trafic de données évaluée comme ayant dépassé ladite première valeur prédéterminée comprend la diminution de ladite puissance d'émission pilote soumise à des contraintes de couverture qui permettent de garantir que ladite pluralité de stations de base peut offrir une couverture sur une zone géographique prédéterminée.

**9.** Procédé d'adaptation de puissance d'émission du signal pilote selon la revendication 8, dans lequel lesdites contraintes de couverture sont générées en fonction de gains de canal pré-calculés à partir de ladite pluralité de stations de base à chaque emplacement dans ladite zone géographique prédéterminée.

**10.** Procédé d'adaptation de puissance d'émission du signal pilote selon la revendication 8, comprenant en outre une étape de génération desdites contraintes de couverture en fonction des gains de canal calculés à partir de ladite pluralité de stations de base à chaque emplacement dans ladite zone géographique prédéterminée comprenant ladite puissance d'émission du signal pilote augmentée pour ces stations de base dans ledit ensemble sélectionné de stations de base adjacentes.

**11.** Procédé d'adaptation de puissance d'émission du signal pilote selon l'une quelconque des revendications précédentes, dans lequel ladite indication de trafic de données pris en charge par chaque station de base comprend une indication de charge de liaison descendante prise en charge par chaque station de base.

**12.** Procédé d'adaptation de puissance d'émission du signal pilote selon l'une quelconque des revendications précédentes, comprenant en outre une répétition périodique de toutes les étapes.

**13.** Produit de programme informatique permettant, lorsqu'il est exécuté sur un ordinateur, d'exécuter le procédé selon l'une quelconque des revendications 1 à 12.

**14.** Contrôleur de réseau permettant d'adapter des puissances d'émission du signal pilote d'une pluralité de stations de base qui offrent une couverture radio dans un réseau de communication sans fil, ledit contrôleur de réseau comprenant :

une logique de surveillance permettant de surveiller une indication du trafic de données pris en charge par chaque station de base ;
une logique d'évaluation permettant d'évaluer si ladite indication de trafic de données a dépassé une première valeur prédéterminée ;
une logique de sélection permettant de sélectionner un ensemble de stations de base adjacentes pour chaque station de base ayant une indication de trafic de données évaluée comme ayant dépassé ladite première valeur prédéterminée ; et
une logique d'instruction permettant de donner une instruction d'augmentation de la puissance d'émission du signal pilote pour ces stations de base dans ledit ensemble sélectionné de stations de base adjacentes qui sont déterminées comme ayant une indication de trafic de données au-delà d'une deuxième valeur prédéterminée, soumise à des contraintes de couverture qui permettent de garantir que ladite pluralité de stations base peut offrir une couverture radio sur une zone géographique prédéterminée, lesdites contraintes de couverture étant calculées en déterminant des points de contrôle de couverture dans ladite zone géographique prédéterminée et en obtenant des gains de canal à partir d'un ensemble de ladite pluralité de stations de base pour chaque point de contrôle de couverture.

Traditional UMTS Architecture

FIG. 1

Step 1 → Step 2 → Step 3

FIG. 2

FIG. 3

FIG. 4

FIG. 5

Overload (100% if all cells are fully loaded

**Improvement**

| | |
|---|---|
| – – | Initial |
| —— | Static CC, 1 layer |
| —— | Dynamic CC, 1 layer |
| - - - | Static CC, 2 layers |
| – – | Dynamic CC, 2 layers |
| ········ | Static CC, whole |
| ········ | Dynamic CC, whole |

Prob (Overload < x-axis)--

Overload, %

Note:
- Overload factor: Sum DL power for overloaded and highly loaded cells divided by the number of cells and max power
- "Whole"(Nokia-like solution) means that all cells with load below 0.7 are involved in pCPICH redistribution.

FIG. 6

EP 2 506 639 B1

FIG. 7

**REFERENCES CITED IN THE DESCRIPTION**

**Patent documents cited in the description**

• US 5499395 A